Europäisches Patentamt

European Patent Office

Office européen des brevets

(11) Veröffentlichungsnummer: **0 492 075 A2**

# (12) EUROPÄISCHE PATENTANMELDUNG

(21) Anmeldenummer: **91117627.9**

(22) Anmeldetag: **16.10.91**

(51) Int. Cl.⁵: **G03B 27/58**

(30) Priorität: **28.12.90 DE 9017521 U**

(43) Veröffentlichungstag der Anmeldung:
**01.07.92 Patentblatt 92/27**

(84) Benannte Vertragsstaaten:
**AT BE CH DE DK ES FR GB GR IT LI LU NL SE**

(71) Anmelder: **FARBFOTO-SCHNELLSERVICE SIEGFRIED KÜBE (V-DIA) GmbH & Co.**
**Dischingerstrasse 8**

**W-6900 Heidelberg(DE)**

(72) Erfinder: **Armbruster, Albert**
**Brennerweg 42**
**W-6900 Heidelberg(DE)**

(74) Vertreter: **Ratzel, Gerhard, Dr.**
**Seckenheimer Strasse 36a**
**W-6800 Mannheim 1(DE)**

(54) **Bausatz zum Umrüsten von Kopierautomaten auf grosse Papierbreiten zum Zwecke der Posterherstellung.**

㊸ Die Erfindung betrifft einen Bausatz zum Umrüsten von Kopierautomaten auf große Papierbreiten zum Zwecke der Posterherstellung,wobei dieser aus einer Papiervorratskassette, einer Papieraufwickelkassette nebst Kassettenaufnahmevorrichtungen, einem jeweils mit entsprechender Klappe versehenen Papierantrieb, einem Papierlängenantrieb, einer Papierspanneinheit, einer Papierauszugseinheit sowie einer Belichtungsstation besteht und zum Zwecke einer Schlaufenbildung des Fotopapiers,den Klappen und den Antrieben- bzw. Einheiten eine diese schwenkende bzw. senkrecht verfahrende Steuereinheit zugeordnet ist.

FIG.1

EP 0 492 075 A2

Die Erfindung betrifft einen Bausatz zum Umrüsten von Kopierautomaten auf große Papierbreiten zum Zwecke der Posterherstellung.

Farbfotos werden zunehmend in Kopierwerken gefertigt.

Hierbei wird nach der Entwicklung des Filmes die Negativrolle einem Kopierautomaten zugeführt. Der Kopierautomat besitzt eine Papiervorratskassette und eine Papieraufwickelkassette, in denen das zu belichtende, bzw. das belichtete Fotopapier aufgerollt ist bzw. wird. Zwischen Aufwickelkassette und Vorratskassette befindet sich eine Belichtungsstation. Um einen höchst möglichsten Durchsatz zu gewährleisten sind solche Einrichtungen automatisch ausgebildet und der Papierschritt erfolgt in kürzest möglicher Zeit in Abhängigkeit der erforderlichen Belichtungszeit. In der Blichtungsstation werden die zuvor einer elektronischen Auswertung unterzogenen Negative belichtet. Um nun die beim Papierein- und auszug auftretenden Störfaktoren vom Belichtungbereich fern zu halten, wird zwischen dem Papierantrieb und dem Papierlängenantrieb sowie der Papierspanneinheit und der Papierauszugseinheit eine Schlaufenbildung des Fotopapiers vorgenommen, so daß die Zugkräfte sich nicht auf den Belichtungsbereich übertragen können. Solche Automaten sind als Kopiergeräte bekannt.

Auf diesen bekannten Einrichtungen ist jedoch nur die Verarbeitung bis maximal 5" Papierbreite möglich, da aufgrund der Papierbreite eine Schlaufenbildung nicht gewährleistet ist, weil mit zunehmender Papierbreite auch die Stärke des Papiers zu nimmt und somit die Eigensteifigkeit des Papiers steigt.

Die Schlaufenbildung wurde herkömmlicherweise über Motoren am Papierantrieb gebildet, welche bei Papierbreiten über 5" und somit einer entsprechenden Stärke des Papiers die Schlaufenbildung nicht mehr gewährleisten können.

Demgegenüber liegt der vorliegenden Erfindung die Aufgabe zugrunde einen Bausatz zu schaffen mit dem ein Umrüsten der bekannten Automaten auf eine Papierbreite über 5 " möglich ist, wobei die Schlaufenbildung vorzugsweise durch pneumatische Einrichtungen vorgenommen wird. Somit ist gewährleistet, daß die Schlaufenbildung erfolgt bevor das Papier in die Belichtungs- und Kopierstation einfährt und somit in dieser Schleife bevorratet ist, damit die vorgegebene Papierlänge nicht unter- bzw überschritten wird, also ohne Widerstand aus der Schlaufe gezogen werden kann und der Papierschritt aus der Schlaufe erfolgt. Somit ist es möglich auch Bilder in Postergröße vollautomatisch herzustellen.

Diese Aufgabe wird erfindungsgemäß durch einen Bausatz gemäß des Anspruchs 1 gelöst, wobei besonders bevorzugte Ausführungen der Erfindung in den Unteransprüchen gekennzeichnet sind.

Der erfindungsgemäße Bausatz besteht aus einer entsprechenden Papiervorratskassette und einer Papieraufwickelkassette die in entsprechenden Kassettenaufnahmevorrichtungen eingesetzt sind. Ferner wird der Bausatz durch einen Papierantrieb mit Klappe, einen Papierlängenantrieb mit Klappe, einer Papierspanneinheit mit Klappe und einer Papierauszugseinheit mit Klappe sowie einer Belichtungsstation gebildet.

Hierbei sind die entsprechenden Einheiten bzw. Antriebe und Klappen zum Zwecke einer Schlaufenbildung des Fotopapiers mit einer Steuereinheit versehen die entsprechende Schwenk- und Verfahrbewegungen dieser Klappen und Einheiten bzw. Antriebe manipulieren. Bevorzugterweise ist hier eine pneumatische Steuereinheit eingesetzt. Beim Einlegen des Fotopapiers beschreitet dieses zunächst eine lineare Bahn und wird sodann durch den senkrecht verfahrbaren Laufwagen in eine Schleife gezwungen, welche während der Bildproduktion ständig erhalten bleibt (bleiben). Dieser Laufwagen wird mindestens aus zwei Rollen mit jeweils stirnseitig angeordneten und die Rollen gelagerten Gelenken, einem Distanzhalter, zweier jeweils stirnseitig angeordneten Verbindungsstützen und einem stirnseitig angeordneten, einen Linearantrieb aufnehmenden Läufer gebildet. Der Linearantrieb ist in senkrecht positionierten Führungssäulen verfahrbar angeordnet und wird beispielsweise durch Pneumatikzylinder auf und ab gefahren. Ebenso erfolgt die Steuerung für die Klappen vorzugsweise pneumatisch.

Anhand den beigefügten Zeichnungen, die besonders bevorzugte Ausführungsbeispiele der Erfindung zeigen, wird diese nun näher beschrieben.

Dabei zeigen:

Figur 1 eine schematische Darstellung des kompletten Bausatzes.

Figur 2 eine Vergrößerung eines Laufwagens.

Figur 3 eine schematische Darstellung der Rollenanordnung

Figur 4 bis 11 die den Laufwagen teilweise bildenden Elemente

Figur 12 und 13 das die Führungswellen fixierende Klemmstück.

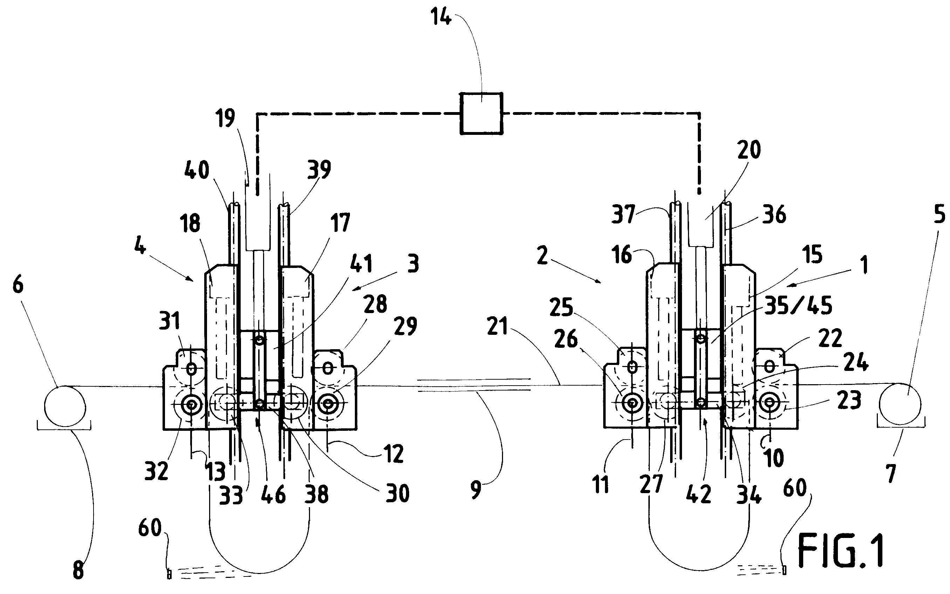

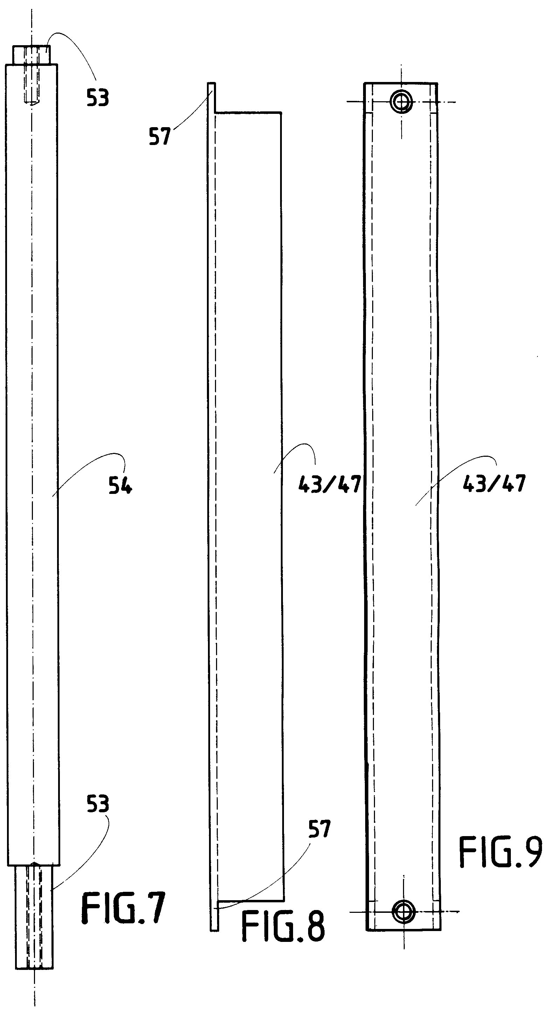

Die Figur 1 zeigt eine schematische Darstellung des erfindungsgemäßen Bausatzes. Unter anderem wird dieser gebildet aus der Papiervorratskassette 5, der Papieraufwickelkassette 6 mit den entsprechenden Kassettenaufnahmevorrichtungen 7,8, dem Papierantrieb 1 mit Klappe 10, dem Papierlängenantrieb 2 mit Klappe 11, der Papierspanneinheit 3 mit Klappe 12, der Papierauszugseinheit 4 mit Klappe 13 und der Belichtungsstation 9. Den Klappen 10 bis 13 und den Antrieben bzw. Einheiten 1 bis 4 ist eine pneumatische Steuereinheit 14 zugeordnet. Im Bereich des Papierantriebes 1, der durch die Rollen 22,23 und 24, sowie des Papierlängenantriebs 2 der durch die Rollen 25,26 27 gebildet wird, sind drei Pneumatikzylinder 15, 16 und 20 zu erkennen. Die Pneumatikzylinder 15,16 vollziehen die Schwenkbewegung der Klappen 10 und 11. Der Pneumatikzylinder 20 ist für die Auf- und Abwärtsbewegung des Laufwagens 42 verantwortlich. Das Gelenk 34 lagert die beiden Rollen 24 und 27 wobei eine senkrecht aufragende Verbindungsstütze 44 mittels einem Distanzhalter 43 (siehe Figur 8,9) mit dem Läufer 45 des Linearantriebs 35 in Verbindung steht.

Es wird somit ein Laufwagen 42 gebildet, der zwischen den beiden Führungssäulen 36 und 37 senkrecht verfahrbar angeordnet ist und durch den Pneumatikzylinder 20 betätigt wird.

Der gleiche Aufbau befindet sich im Bereich der Papierspanneinheit 3 und der Papierauszugseinheit 4.

Auch hier sind wieder sechs Rollen, die Rollen 28,29,30,31,32 und 33 zu erkennen , wobei die Rollen 33 und 30 hier Teil des Laufwagens 46 sind und mittels Gelenk 38 miteinander verbunden und gelagert werden. Die Verbindungsstütze 48 ist an beiden Stirnseiten des Laufwagens 46 vorgesehen wobei zwischen diesen Verbindunsstützen 48 entsprechende Distanzhalter 47 und 54 (siehe Figur 7-9) eingesetzt sind. An einer Stirnseite ist wiederum der Läufer 49 mit Linearantrieb 41, zwischen zwei Führungssäulen 39 und 40 angeordnet. Der Pneumatikzylinder 19 vollzieht die Auf- und Abwärtsbewegung des Laufwagens 46. Die Pneumatikzylinder 17 und 18 vollziehen die Schwenkbewegung der Klappen 12 und 13.

Nachfolgend wird nun der Papiereinlauf, die Funktion des Laufwagens und der Klappensteuerung bis hin zum Papierauszug beschrieben.

Vor in Betriebnahme des Gerätes haben die Klappen die in den Figuren 1 bis 3 strichpunktierte Stellung.

Beim Einschalten des Gerätes erfolgt die waagrechte Einlaufstellung der Klappen zum Zwecke des Papiereinlaufs, wobei zunächst der Laufwagen 42 nach oben fährt und die Klappe 10 schließt. Danach schließt Klappe 11. Diese Funktion vollzieht sich auch im Bereich der Papierspanneinheit 3 bzw. der Papierauszugseinheit 4.Die Papiervorratskassette 5 wird angehängt. Danach treibt die Rolle 23 das Papier 21 an, welches über die waagrechten Klappen 10 und 11 zur Rolle 26 transportiert wird. Die senkrecht mit dem Laufwagen verfahrbaren Rollen 27/24 sind bei dieser Funktion dafür verantwortlich, daß das Papier 21 nicht nach oben abdriften kann, wozu diese Rollen 27/24 direkt über dem einlaufen dem Papier 21 positioniert sind.Der Papieranfang befindet sich nun zunächst bei Rolle 26. Beim Aufsetzen der Papieraufwickelkassette 6 läuft der Laufwagen 42 nach unten und die Rolle 24 drückt das Papier an die Rolle 21. Die Rolle 23 setzt sich in Betrieb,treibt das Papier 21 an und die Schlaufenbildung wird vollzogen. Die Schlaufenbildung endet nach erreichen einer Lichtschranke 60. Nach der Schlaufenbildung läuft die Transportwalze 26 und 29 an. Das Papier läuft dann bis zur Papierauszugswalze 32 über die waagrechten Klappen 12/13 am Papierauszug.

Der Laufwagen 46 fährt nach unten, wobei sich die Klappen nach unten in Ausgangsstellung stellen, wie dies auch im Bereich des Einlaufs erfolgt ist. Die Rolle 33 drückt das Papier an die Rolle 32. Jetzt erfolgt beim Papiertransport ebenfalls die Schlaufenbildung und das Papier 21 kann in der Kassette 6 aufgewickelt werden.

beim entfernen der beiden Kassetten 5 und 6 erfolgt automatisch die Grundstellung.

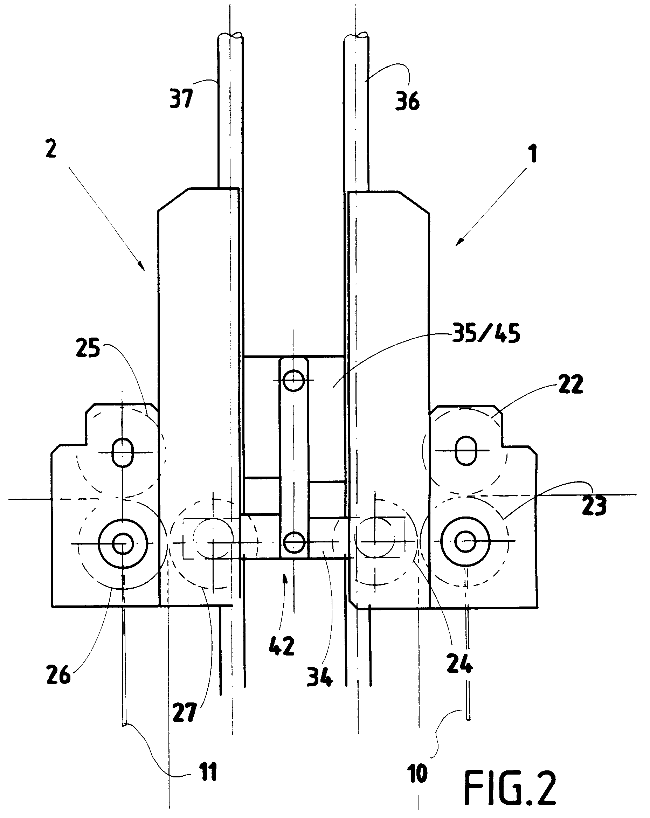

Die Figur 2 zeigt eine Vergrößerung des Laufwagens im Bereich des Papierantriebs 1 und Papierlängenantriebs 2. Die gleichen Elemente sind hier mit den gleichen Bezugszeichen gekennzeichnet.

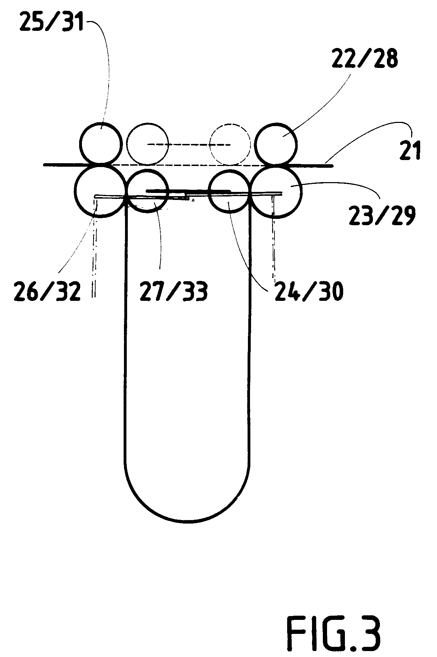

Figur 3 zeigt eine schematische Darstellung der Rollenanordnung, wobei die Rollen 24(30) und 27(33) höhenverfahrbar (strichliniert) dargestellt sind. Ferner ist die Klappenstellung in geöffneter (strichliniert und geschlossener Stellung erkennbar.

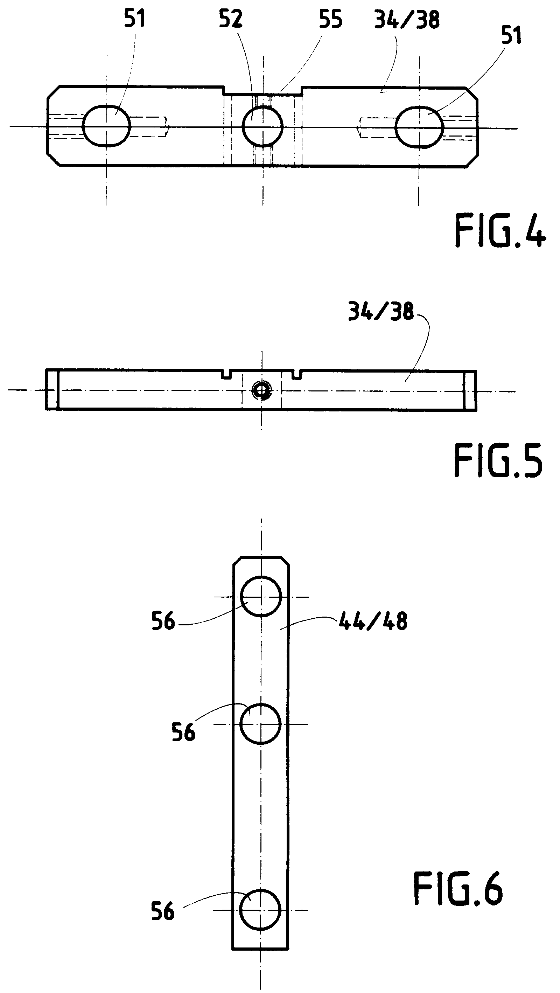

Die Figuren 4 und 5 zeigen das die Rollen 24,27 bzw. 30, 33 verbindende Gelenk 34 bzw 38. In die Langlochbohrungen 51 werden die Gelenkachsen der Rollen 24 und 27 bzw. 30 und 33 eingeführt. In die Paßbohrung 52 kommt der Lagerzapfen 53 des Distanzstücks 54 (Figur 7) zu liegen, während der Distanzhalter 43,47 in die Aussparung 55 eingelegt wird.

Die Figur 6 zeigt die Verbindungsstütze 44 bzw. 48, die jeweils stirnseitig des Laufwagens angeordnet ist/sind, mit seinen drei Paßbohrungen 56.

Die Figur 7 zeigt das Distanzstück 54 mit den Lagerzapfen 53.

Die Figuren 8 und 9 zeigen den Distanzhalter 43,47. Mit seinen ausragenden Stegen 57, kommt dieser in der Aussparung 55 des Gelenkes 34, 38 zu liegen.

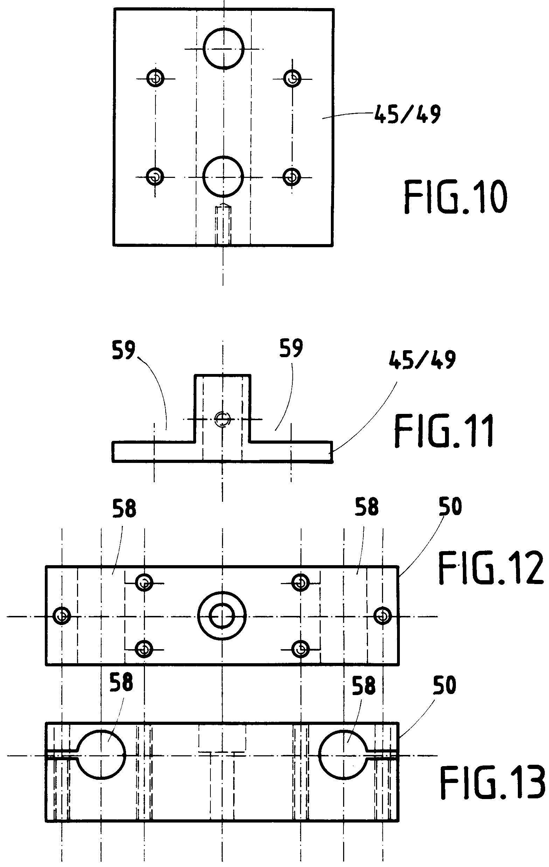

Die Figuren 10 und 11 zeigen den Läufer 45, 49. Er ist im Querschnitt T-förmig ausgebildet und nimmt im Bereich seiner Einbuchtungen 59 die Linearantriebe 41, 35 auf und ist fest mit dem Laufwagen 46, 42 verbunden.

Der Läufer und somit die entsprechenden Laufwagen sind zwischen den Führungssäulen angeordnet, wobei jeweils ein Säulenpaar in einem Klemmstück 50 gemäß den Figuren 12 und 13 fixiert ist, wozu diese entsprechende Bohrungen 58 zur Aufnahme der Führungssäulen aufweist.

Mit der vorliegenden Erfindung wird ein Bausatz geschaffen, mit dessen Ausbildung und Einzelelementen erreicht wird, daß auch eine Schlaufenbildung für Fotokpapier mit starken Dicken gewährleistet ist.

Bezugzeichenliste

| 1 | Papierantrieb |
| 2 | Papierlängenantrieb |
| 3 | Papierspanneinheit |
| 4 | Papierauszugseinheit |
| 5 | Papiervorratskassette |
| 6 | Papieraufwickelkassette |
| 7 | Kassettenaufnahmevorrichtung |
| 8 | Kassettenaufnahmevorrichtung |
| 9 | Belichtungsstation |
| 10 | Klappe |
| 11 | Klappe |
| 12 | Klappe |
| 13 | Klappe |
| 14 | Steuereinheit |
| 15 | Pneumatikzylinder |
| 16 | Pneumatikzylinder |
| 17 | Pneumatikzylinder |
| 18 | Pneumatikzylinder |
| 19 | Pneumatikzylinder |
| 20 | Pneumatikzylinder |
| 21 | Fotopapier |
| 22 | Rolle |
| 23 | Rolle |
| 24 | Rolle |
| 25 | Rolle |
| 26 | Rolle |
| 27 | Rolle |
| 28 | Rolle |
| 29 | Rolle |
| 30 | Rolle |
| 31 | Rolle |
| 32 | Rolle |
| 33 | Rolle |
| 34 | Gelenk |
| 35 | Linearantrieb |
| 36 | Führungssäule |
| 37 | Führungssäule |
| 38 | Gelenk |
| 39 | Führungssäule |
| 40 | Führungssäule |
| 41 | Linearantrieb |
| 42 | Laufwagen |
| 43 | Distanzhalter |
| 44 | Verbindungsstütze |
| 45 | Läufer |
| 46 | Laufwagen |
| 47 | Distanzhalter |
| 48 | Verbindungsstütze |
| 49 | Läufer |
| 50 | Klemmstück |
| 51 | Bohrung |
| 52 | Paßbohrung |
| 53 | Lagerzapfen |
| 54 | Distanzstück |
| 55 | Aussparung |
| 56 | Paßbohrung |
| 57 | Steg |
| 58 | Bohrung |
| 59 | Einbuchtung |
| 60 | Lichtschranke |

**Patentansprüche**

1. Bausatz zum Umrüsten von Kopierautomaten auf große Papierbreiten zum Zwecke der Posterherstellung,
   dadurch gekennzeichnet,
   daß der Bausatz aus einer Papiervorratskassette (5), einer Papieraufwickelkassette (6) nebst Kassettenaufnahmevorrichtungen (7), (8), einem jeweils mit entsprechender Klappe 10,11,12,13 versehenen Papierantrieb (1), einem Papierlängenantrieb (2), einer Papierspanneinheit (3), einer Papierauszugseinheit (4) sowie einer Belichtungsstation (9) besteht, wobei zum Zwecke einer Schlaufenbildung des Fotopapiers (21) den Klappen (10-13) und den Antrieben- bzw Einheiten (1-4) eine diese schwenkende bzw. senkrecht verfahrende Steuereinheit (14) zugeordnet ist.

2. Bausatz nach Anspruch 1,
   dadurch gekennzeichnet,
   daß die Steuereinheit (14) pneumatisch ausgebildet ist.

3. Bausatz nach Anspruch 1 bis 2,
   dadurch gekennzeichnet,
   daß der Papierantrieb (1) aus drei, zumindest teilweise antreibenden bzw. antreibbaren Rollen (22,23,24) besteht.

4. Bausatz nach Anspruch 1 bis 3,
   dadurch gekennzeichnet,
   daß der Papierlängenantrieb (2) aus drei zumindest teilweise antreibenden bzw. antreibbaren Rollen (25,26,27) besteht.

5. Bausatz nach Anspruch 1 bis 4,
   dadurch gekennzeichnet,
   daß die Papierspanneinheit (3) aus drei zumindest teilweise antreibenden bzw. antreibbaren Rollen (28,29,30) besteht,

6. Bausatz nach Anspruch 1 bis 5,
   dadurch gekennzeichnet,
   daß die Papierauszugseinheit (4) aus drei zumindest teilweise antreibenden bzw. antreibbaren Rollen (31,32,33) besteht.

7. Bausatz nach Anspruch 1 und mindestens einem der vorhergehenden Ansprüche,
dadurch gekennzeichnet,
daß die Rollen (24 und 27, 30 und 33) jeweils in oder an einem senkrecht verfahrbaren Laufwagen (42/46) angeordnet sind.

8. Bausatz nach Anspruch 1 bis 7,
dadurch gekennzeichnet,
daß die Rollen (24 und 27) des Papierantriebs (1) und des Papierlängenantriebs (2) mittels je eines stirnseitig angeordneten Gelenkes (34) gemeinsam gelagert sind.

9. Bausatz nach Anspruch 1 bis 8,
dadurch gekennzeichnet,
daß die Rollen (24 und 27) gemeinsam senkrecht verfahrbar ausgebildet sind.

10. Bausatz nach Anspruch 1 bis 9,
dadurch gekennzeichnet,
daß die Rollen (24 und 27), an mindestens einer Stirnseite, mittels eines zwischen Führungssäulen (36,37) angeordneten Linearantriebs (35) senkrecht verfahrbar sind.

11. Bausatz nach Anspruch 1 bis 10,
dadurch gekennzeichnet,
daß die Rollen (30 und 33) in der Papierspanneinheit (3) und der Papierauszugseinheit (4) mittels eines stirnseitig angeordneten Gelenkes (38) gemeinsam gelagert sind.

12. Bausatz nach Anspruch 1 und mindestens einem der vorhergehenden Ansprüche,
dadurch gekennzeichnet,
daß die Rollen (30 und 33) gemeinsam senkrecht verfahrbar ausgebildet sind.

13. Bausatz nach Anspruch 1 bis 12,
dadurch gekennzeichnet,
daß die Rollen (30 und 33) an mindestens einer Stirnseite mittels eines zwischen zwei Führungsäulen (39,40) angeordneten Linearantriebs (41) senkrecht verfahrbar sind.

14. Bausatz nach Anspruch 1 bis 13,
dadurch gekennzeichnet,
daß der Laufwagen (42) mindestens aus den Rollen (24 und 27), sowie jeweils an der Stirnseite angeordneten und die Rollen lagernden Gelenken (34), Distanzhaltern (43),(54) zweier jeweils stirnseitig angeordneten Verbindungsstützen (44) und einem stirnseitig angeordneten, einen oder mehrere Linearantriebe aufnehmenden Läufer (45) besteht.

15. Bausatz nach Anspruch 1 bis 14,
dadurch gekennzeichnet,
daß der Laufwagen (46) mindestens aus den Rollen (30 und 33) und jeweils stirnseitig angeordneten, die Rollen lagernden Gelenken (38), Distanzhaltern (47),(54), zweier jeweils stirnseitig angeordneten Verbindungsstützen (48) und einem stirnseitig angeordneten, einen oder mehrere Linearantriebe (41) aufnehmenden Läufer (49) besteht.

16. Bausatz nach Anspruch 1 bis 15,
dadurch gekennzeichnet,
daß die Führungssäulen (36,37,39 und 40) jeweils in einem Klemmstück (50) fixiert sind.

FIG.1

FIG.2

FIG.3

FIG.4

FIG.5

FIG.6

53

57

54

43/47

43/47

53

57

FIG.7

FIG.8

FIG.9

45/49

FIG.10

59    59    45/49

FIG.11

58    58    50

FIG.12

58    58    50

FIG.13

11